# EUROPEAN PATENT APPLICATION

(11) **EP 4 819 544 A1**
(43) Date of publication of application: **07.10.2026**
(21) Application number: 26167605.0
(22) Date of filing: 25.03.2026
(51) Int. Cl.: H04L 9/40, H04L 67/12

(54) **CONTROLLER, METHOD, AND PROGRAM**

(30) Priority: 04.04.2025 JP 2025062476
(71) Applicant: OMRON Corporation, Kyoto-shi, Kyoto 600-8530 (JP)
(72) Inventor: OKAMURA, Kotaro, Kyoto-shi, 600-8530 (JP)
(74) Representative: Mewburn Ellis LLP

(57) **Abstract**

When it is determined that a session start request (32) transmitted from an information processing apparatus (200) indicates a lower security level than a predetermined security level, a controller (100) for FA (Factory Automation) determines whether or not the session start request satisfies a predetermined condition for indicating validity of the request, when it is determined that the predetermined condition is satisfied, the controller (100) sets the lower security level on a session established by the session start request, and when it is determined that the session start request indicates the predetermined security level, the controller (100) sets the predetermined security level on the session.

## Description

### CROSS REFERENCE TO RELATED APPLICATIONS

This nonprovisional application is based on Japanese Patent Application No. 2025-062476 filed on April 4, 2025 with the Japan Patent Office, the entire contents of which are hereby incorporated by reference.

### BACKGROUND OF THE INVENTION

### Field of the Invention

The present disclosure relates to a controller, a method, and a program for FA (Factory Automation).

### Description of the Background Art

A controller for FA as provided in a production site communicates with an information processing apparatus configured to receive a user instruction for operating the controller. For example, Japanese Patent Laying-Open No. 2003-241805 or Japanese Patent Laying-Open No. 2005-38063 discloses a development support apparatus configured to communicate with a controller for FA.

### SUMMARY OF THE INVENTION

In order to ensure communication security between the controller for FA and the information processing apparatus in the production site, it is desirable to apply a unified communication protocol. However, due to such a circumstance that users' degrees of proficiency of operations for the information processing apparatus or for communication differ among the users, it is not easy to satisfy the above desire.

Therefore, one object of the present disclosure is to provide a communication environment by which communication security can be ensured even under the above circumstance.

A controller for FA (Factory Automation) according to the present disclosure includes: a communication interface configured to connect a network to which an information processing apparatus belongs; a level determination unit configured to determine whether a session start request transmitted from the information processing apparatus indicates a predetermined security level or a lower security level than the predetermined security level; a condition determination unit configured to determine, when it is determined by the level determination unit that the session start request indicates the lower security level, whether or not the session start request satisfies a predetermined condition for indicating validity of the request; and a setting unit configured to set a security level on a session established in response to the session start request, wherein the setting unit is configured to set the predetermined security level on the session when it is determined by the level determination unit that the session start request indicates the predetermined security level, and set the lower security level on the session when it is determined by the level determination unit that the session start request indicates the lower security level and it is determined by the condition determination unit that the predetermined condition is satisfied.

According to the above disclosure, even when the security level to be used by the user or the information processing apparatus for the session is lower than the predetermined security level, it is permitted to set the lower security level for the session corresponding to the session start request.

Moreover, such a lower security level is permitted be set as long as the session start request satisfies the predetermined condition for indicating the validity of the request, and is not permitted to be set when the predetermined condition is not satisfied. Therefore, even when the lower security level is set on the session, the communication security on the session can be ensured.

In the above disclosure, the predetermined condition for indicating the validity includes a condition indicating validity of a request source having made the session start request.

According to the above disclosure, the condition indicating the validity of the request source can be applied to the predetermined condition indicating the validity of the session start request.

In the above disclosure, the controller is configured to communicate a communication frame with the information processing apparatus, a communication frame for the session start request includes identification information for identifying a transmission source having transmitted the communication frame, and the condition determination unit is configured to determine whether or not the identification information included in the communication frame for the session start request satisfies the condition indicating the validity.

According to the above disclosure, the controller can acquire the identification information for determining the validity of the request together with the session start request.

In the above disclosure, the predetermined condition includes a condition for an expiration period for which the predetermined condition is usable.

According to the above disclosure, the controller does not determine whether to permit to set the lower security level regardless of whether or not the requirement for the validity is satisfied with regard to the session start request for which the expiration period included in the predetermined condition has passed. Therefore, the communication security on the session can be ensured.

In the above disclosure, the information processing apparatus is configured to transmit a negotiation request to the controller before the session start request, the negotiation request including data indicating one or more security levels usable for the session by the information processing apparatus, and the controller is configured to compare the one or more security levels indicated by the data included in the negotiation request received from the information processing apparatus with one or more security levels usable for the session by the controller, and transmit a comparison result to the information processing apparatus.

According to the above disclosure, the controller can compare the one or more security levels usable by the information processing apparatus with the one or more security levels usable by the controller before the session start request, and can transmit the comparison result to the information processing apparatus.

In the above disclosure, the controller is configured to notify, in response to a negotiation request transmitted from the information processing apparatus before the session start request, one or more security levels usable for the session by the controller to the information processing apparatus.

According to the above disclosure, before the session start request, the controller can notify the one or more security levels usable for the session by the controller to the information processing apparatus.

A method according to the present disclosure is a method performed by a controller for FA (Factory Automation), wherein the controller includes a communication interface configured to connect a network to which an information processing apparatus belongs, the method including: determining whether a session start request transmitted from the information processing apparatus indicates a predetermined security level or a lower security level than the predetermined security level; determining, when it is determined that the session start request indicates the lower security level in the determining whether the session start request transmitted from the information processing apparatus indicates the predetermined security level or the lower security level than the predetermined security level, determining whether or not the session start request satisfies a predetermined condition for indicating validity of the request; and setting a security level on a session established in response to the session start request, wherein the setting includes setting the predetermined security level on the session when it is determined that the session start request indicates the predetermined security level in the determining whether the session start request transmitted from the information processing apparatus indicates the predetermined security level or the lower security level than the predetermined security level, and setting the lower security level on the session when it is determined that the session start request indicates the lower security level in the determining whether the session start request transmitted from the information processing apparatus indicates the predetermined security level or the lower security level than the predetermined security level and it is determined that the predetermined condition is satisfied in the determining whether or not the session start request satisfies the predetermined condition for indicating the validity of the request.

A program according to the present disclosure is a program for causing a processor of a controller for FA (Factory Automation) to perform a method, wherein the controller includes a communication interface configured to connect a network to which an information processing apparatus belongs, the method including: determining whether a session start request transmitted from the information processing apparatus indicates a predetermined security level or a lower security level than the predetermined security level; determining, when it is determined that the session start request indicates the lower security level in the determining whether the session start request transmitted from the information processing apparatus indicates the predetermined security level or the lower security level than the predetermined security level, whether or not the session start request satisfies a predetermined condition for indicating validity of the request; and setting a security level on a session established in response to the session start request, wherein the setting includes setting the predetermined security level on the session when it is determined that the session start request indicates the predetermined security level in the determining whether the session start request transmitted from the information processing apparatus indicates the predetermined security level or the lower security level than the predetermined security level, and setting the lower security level on the session when it is determined that the session start request indicates the lower security level in the determining whether the session start request transmitted from the information processing apparatus indicates the predetermined security level or the lower security level than the predetermined security level and it is determined that the predetermined condition is satisfied in the determining whether or not the session start request satisfies the predetermined condition for indicating the validity of the request.

When the above method is performed or the above program is executed, even if the security level to be used for the session by the user or the information processing apparatus is lower than the predetermined security level, it is permitted to set the lower security level on the session corresponding to the session start request.

Moreover, such a lower security level is permitted to be set as long as the session start request satisfies the predetermined condition for indicating the validity of the request, and is not permitted to be set when the predetermined condition is not satisfied. Therefore, even when the lower security level is set on the session, the communication security on the session can be ensured.

The foregoing and other objects, features, aspects and advantages of the present invention will become apparent from the following detailed description of the present invention when taken in conjunction with the accompanying drawings.

### BRIEF DESCRIPTION OF THE DRAWINGS

Fig. 1 is a diagram for schematically illustrating an application example of the present disclosure.
Fig. 2 is a schematic diagram showing a system for FA according to the present embodiment.
Fig. 3 is a schematic diagram showing a hardware configuration of a support apparatus according to the present embodiment.
Fig. 4 is a schematic diagram showing a hardware configuration of a processing unit of a controller according to the present embodiment.
Fig. 5 is a schematic diagram showing an example of information stored in a non-volatile memory of Fig. 4.
Fig. 6 is a diagram schematically showing background of the present embodiment.
Fig. 7 is a diagram schematically showing the background of the present embodiment.
Fig. 8 is a diagram schematically showing the background of the present embodiment.
Fig. 9 is a diagram schematically showing an operation flow of a pre-registration process according to the present embodiment.
Fig. 10 is a diagram schematically showing the operation flow of the pre-registration process according to the present embodiment.
Fig. 11 is a diagram schematically showing the operation flow of the pre-registration process according to the present embodiment.
Fig. 12 is a diagram schematically showing the operation flow of the pre-registration process according to the present embodiment.
Fig. 13 is a diagram schematically showing the operation flow of the pre-registration process according to the present embodiment.
Fig. 14 is a diagram schematically showing the operation flow of the pre-registration process according to the present embodiment.
Fig. 15 is a diagram schematically showing the operation flow of the pre-registration process according to the present embodiment.
Fig. 16 is a diagram schematically showing the operation flow of the pre-registration process according to the present embodiment.
Fig. 17 is a diagram schematically showing a configuration example of a communication frame according to the present embodiment.
Fig. 18 is a diagram schematically showing a management table according to the present embodiment.
Fig. 19 is a diagram schematically showing the management table according to the present embodiment.
Fig. 20 is a diagram schematically showing the management table according to the present embodiment.
Fig. 21 is a diagram schematically showing the management table according to the present embodiment.
Fig. 22 is a diagram schematically showing the management table according to the present embodiment.
Fig. 23 is a processing flowchart of the controller according to the present embodiment.
Fig. 24 is a processing flowchart of the controller according to the present embodiment.
Fig. 25 is a processing flowchart of the controller according to the present embodiment.
Fig. 26 is a processing flowchart of the controller according to the present embodiment.
Fig. 27 is a processing flowchart of the controller according to the present embodiment.
Fig. 28 is a diagram schematically showing a sequence of negotiation according to the present embodiment.

### DESCRIPTION OF THE PREFERRED EMBODIMENTS

Embodiments of the present disclosure will be described in detail with reference to figures. It should be noted that the same or corresponding parts in the figures are denoted by the same reference characters, and will not be described repeatedly.

### <§. Application Example>

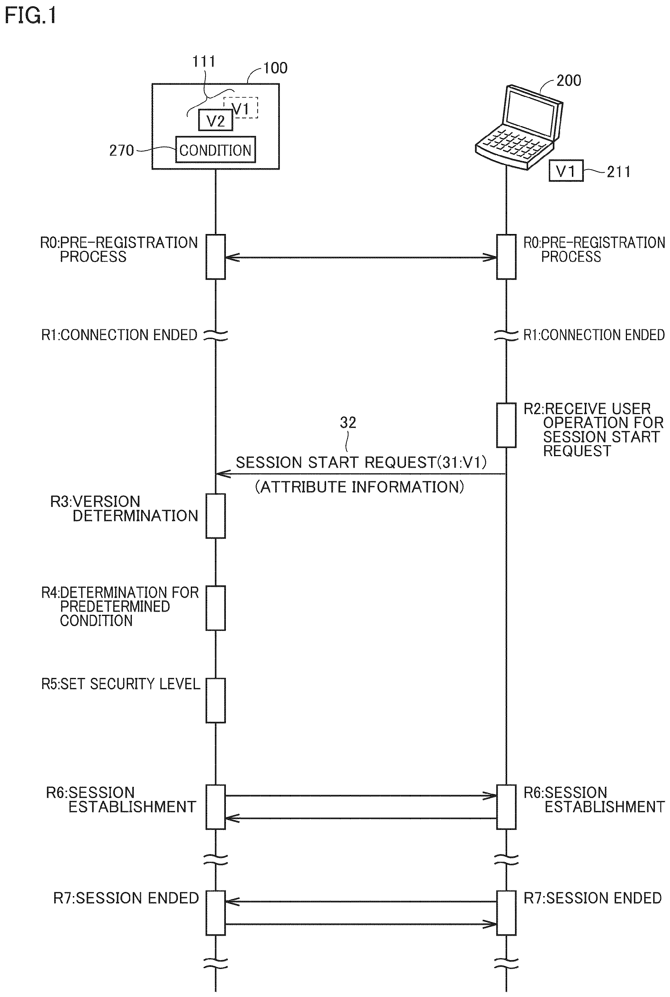

First, an example of a scene to which the present invention is applied will be described. Fig. 1 is a diagram for schematically illustrating an application example of the present disclosure. In Fig. 1, a communication sequence between a controller 100 for FA and a support apparatus 200, which is an example of an information processing apparatus, is shown in association with processes.

In the present disclosure, when controller 100 successfully authenticates support apparatus 200, a communication session is established between controller 100 and support apparatus 200. When the communication session is established, the communication session can be maintained from the start to end of the communication. In the present disclosure, a secure communication protocol is applied to each communication session established between controller 100 and support apparatus 200 (hereinafter, the communication session will be also simply referred to as "session"). In the present disclosure, the secure communication protocol indicates, for example, a version V1, a version V2 indicating a higher security level than version V1, and a version V3 having a higher security level than version V2.

The security level of the communication protocol may be determined by, for example, a type of element to be used for authentication of a connection destination, the number of such elements, or a combination of the elements. Such a type of the element includes, for example, at least one of attribute information indicating an attribute of the connection destination, information (for example, an electronic certificate) indicating reliability of the connection destination, an encryption algorithm, an encryption key, and a falsification detection algorithm. More specifically, for example, the security level can be different between the communication protocols by differing, between communication protocols, at least one or more of whether or not the attribute information is used for the authentication of the connection destination, whether or not the information indicating the reliability of the connection destination is used for the authentication of the connection destination, the type (a password, biological information, or the like) of the attribute information to be used, a type of the encryption algorithm to be used, a type of the encryption key to be used in the encryption algorithm, a type of the falsification detection algorithm to be used, and the like. It should be noted that the elements used for the method of authenticating the connection destination are not limited to the types described above.

In the present disclosure, the expression "security level is set" means enabling communication according to any communication protocol of versions V1 to V3 on a session. It should be noted that the security levels are not limited to the three versions V1, V2, and V3, and may be two versions V1 and V2, or may be four or more versions by which four or more security levels can be provided.

Controller 100 controls a target (production facility or the like) for FA by executing a control program. Controller 100 includes, for example, a PLC (Programmable Logic Controller), an IPC (Industrial Personal Computer), or the like. Support apparatus 200 provides a development environment for an application program including a control program, and assists a user operation including setting of controller 100.

In Fig. 1, versions V1 and V2 are shown as the security levels. A case is shown where controller 100 has a security level 111 usable for a session and indicating versions V1 and V2, and support apparatus 200 has a security level 211 usable for a session and indicating version V1.

In Fig. 1, controller 100 establishes a connection to support apparatus 200, and performs a pre-registration process on the connection (step R0). In the pre-registration process, information stored (registered) in a management table 185 including a condition table 270 described later is communicated. Thereafter, the connection is ended (step R1).

In the pre-registration process, a security level (hereinafter, also referred to as predetermined security level) recommended to be used on the session is set in controller 100. More specifically, in controller 100, for example, the highest security level of the two types of security levels, i.e., versions V1 and V2 indicated by security level 111 is set as the predetermined security level ("V2" in the case of Fig. 1). It should be noted that the predetermined security level is not limited to one, and may be two or more each indicating a high security level.

Support apparatus 200 receives a user operation on support apparatus 200 (step R2), and transfers, to controller 100, a communication frame for a session start request 32 that is based on the user operation. The communication frame includes session start request 32, a secure communication version 31 indicating a security level requested by support apparatus 200 to be used in the session, and attribute information of session start request 32. Secure communication version 31 indicates, for example, "V1" in Fig. 1. The attribute information includes information indicating validity of session start request 32. The information indicating the validity includes, for example, identification information of the user or support apparatus 200 that is the request source. The identification information indicating the validity of the request source is, for example, information for authenticating the request source, and includes, for example, a user account (such as a username) of the user or support apparatus 200, a communication address of support apparatus 200, or the like. The information for identifying the validity of the request source is not limited to these, and identification information generated separately may be used therefor. For example, when a user having an administrator authority requests controller 100 in advance to issue a connection ticket or certificate for identifying that the user is a valid user and then the user operates support apparatus 200 so as to attain connection to controller 100, session start may be requested by using a set of the identification information such as the connection ticket or certificate and the identification information such as the above-described user account.

Controller 100 determines whether secure communication version 31 of session start request 32 transferred from support apparatus 200 indicates the predetermined security level or the lower security level than the predetermined security level (step R3). When it is determined that secure communication version 31 of session start request 32 indicates the lower security level, controller 100 determines whether session start request 32 satisfies a predetermined condition in condition table 270 for indicating the validity of the request (step R4). In step R4, for example, it is determined whether or not the identification information (user account or communication address) included in the attribute information of session start request 32 satisfies the predetermined condition.

Controller 100 sets the security level on the session established in response to session start request 32 (step R5). More specifically, controller 100 sets the lower security level on the session established in response to the request when it is determined that secure communication version 31 indicates the lower security level than the predetermined security level but session start request 32 satisfies the predetermined condition, and sets the predetermined security level on the session established in response to the request when it is determined that the security level of secure communication version 31 indicates the predetermined security level.

In Fig. 1, secure communication version 31 indicates "V1" that is the lower level than "V2" that is the predetermined security level; however, since it is determined that the predetermined condition is satisfied, controller 100 sets the security level "V1" on the session established in response to session start request 32 (step R6). An online data process is performed on the session, and then the session is ended (step R7).

In Fig. 1, even when it is determined that the secure communication version of session start request 32 transferred from support apparatus 200 indicates the lower level than the predetermined security level recommended by controller 100, controller 100 sets the lower security level on the session established in response to session start request 32 as long as session start request 32 satisfies the predetermined condition. Therefore, for example, even when the security level usable by the user or support apparatus 200 is lower than the security level recommended by controller 100, it is permitted to set the lower security level on the session corresponding to session start request 32.

Such a lower security level is permitted be set as long as session start request 32 satisfies the predetermined condition for indicating the validity of the request, and is not permitted to be set when the predetermined condition is not satisfied. Therefore, even when the lower security level is set on the session, the communication security on the session can be ensured.

As a more specific application example of the present invention, the following describes more detailed configuration and process of a system or apparatus according to the present embodiment.

### <A. System Configuration>

First, a system 1000 according to the present embodiment will be described.

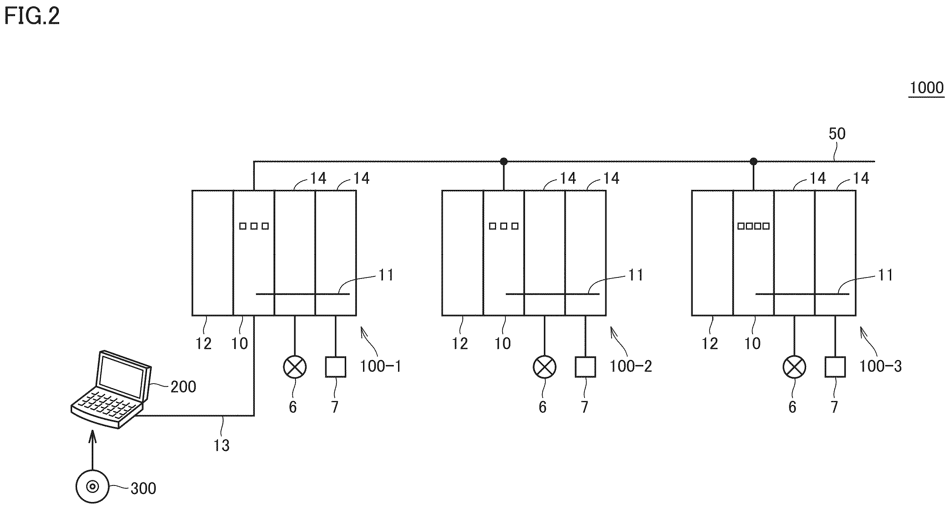

Fig. 2 is a schematic diagram showing system 1000 for FA according to the present embodiment. System 1000 includes a plurality of controllers 100-1, 100-2, 100-3 connected to one another via a network 50. Common configurations among controllers 100-1, 100-2, and 100-3 will be collectively referred to as a controller 100. It should be noted that the number of controllers 100 connected to network 50 is not limited to a multiple number of controllers, and may be one or more controllers.

Controller 100 includes: a processing unit 10 that is an entity configured to execute a program; a power supply unit 12 configured to supply power to processing unit 10 and the like; and an input/output unit 14 configured to communicate a signal between controller 100 and a field device. Input/output unit 14 is connected to processing unit 10 via a system bus 11. Typically, input/output unit 14 acquires an input signal from a detection sensor 6, which is included in the field device, and drives a relay 7, which is included in the field device, in accordance with a result of the execution of the program in processing unit 10.

Support apparatus 200 communicates with controller 100 via a network 13. Support apparatus 200 includes: a module configured to assist development of an application program to be executed by controller 100; and a module configured to monitor an operation state of controller 100 connected thereto via network 13, values of various data, and the like.

### <B. Hardware Configuration>

### (b1: Hardware Configuration of Support Apparatus)

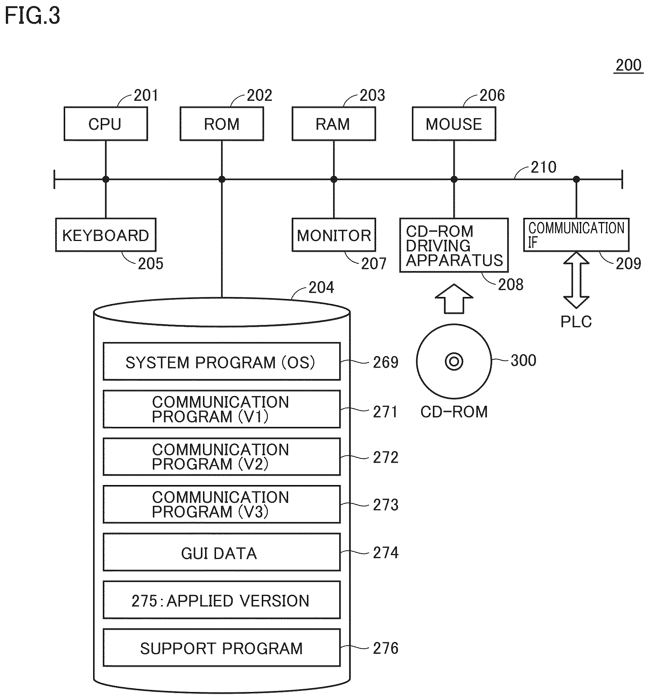

Fig. 3 is a schematic diagram showing a hardware configuration of support apparatus 200 according to the present embodiment. Referring to Fig. 3, support apparatus 200 is typically constituted of a general-purpose computer. Such a computer can include an HMI (Human Machine Interface) device, a smartphone carried by the user, a tablet device, and the like. It should be noted that support apparatus 200 is preferably a notebook type personal computer excellent in portability from the viewpoint of maintainability.

Referring to Fig. 3, support apparatus 200 includes: a CPU (Central Processing Unit) 201 configured to execute various programs including an OS (Operating System); a ROM (Read Only Memory) 202 configured to store BIOS (Basic Input Output System), various data, and the like; and a memory RAM (Random Access Memory) 203 configured to provide a working area for storing data necessary for CPU 201 to execute the program; and a hard disk (HDD: Hard Disk Drive) 204 configured to store the program to be executed or the like by CPU 201 in a non-volatile manner.

Support apparatus 200 further includes: a keyboard 205 and a mouse 206 each configured to receive an operation from the user on support apparatus 200; and a monitor 207 configured to present information to the user. Support apparatus 200 includes a communication interface (IF) 209 configured to communicate with controller 100 (processing unit 10) or the like.

Typically, each of the various programs to be executed by support apparatus 200 is stored in a CD-ROM (Compact Disc Read Only Memory) 300 and is distributed. The program stored in CD-ROM 300 is read by a CD-ROM (Compact Disk-Read Only Memory) driving apparatus 208 and is stored into hard disk (HDD) 204 or the like. Alternatively, support apparatus 200 may be configured such that the program is downloaded from a high-level host computer or the like to support apparatus 200 through a network.

Referring to Fig. 3, HDD 204 stores a plurality of programs or data including: a system program 269 including an OS; communication programs 271, 272, and 273 configured to communicate with controller 100 in accordance with communication protocols of versions V1 to V3; GUI (Graphical User Interface) data 274 for presenting a GUI screen; data indicating an applied version 275 described later; and a support program 276. The respective elements of support apparatus 200 communicate data via an internal bus 210.

### (b2: Hardware Configuration of Controller)

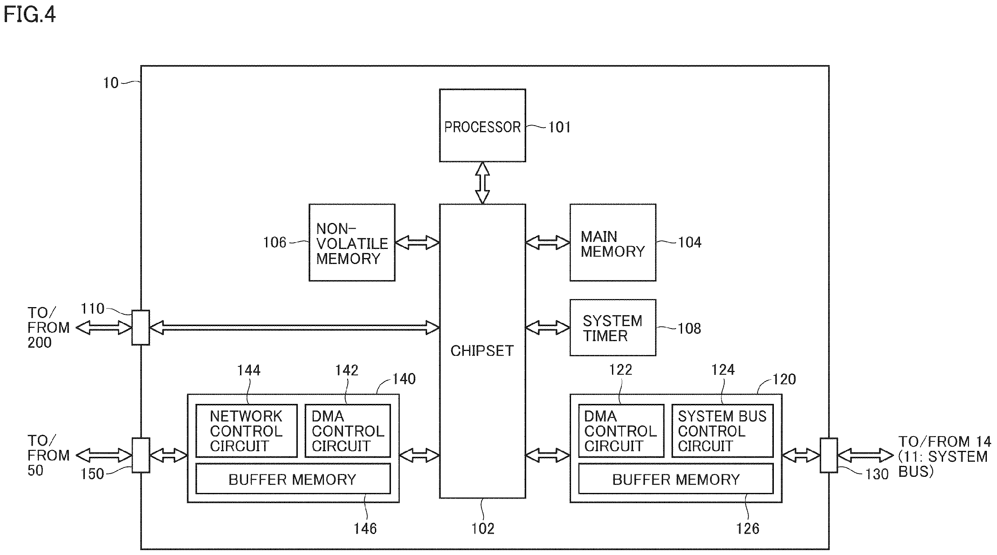

Fig. 4 is a schematic diagram showing a hardware configuration of processing unit 10 of controller 100 according to the present embodiment. Referring to Fig. 4, processing unit 10 includes a processor 101, a chipset 102, a main memory 104, a non-volatile memory 106, a system timer 108, a system bus controller 120, a network controller 140, and a USB (Universal Serial Bus) connector 110. Chipset 102 and the other components are coupled to one another via various buses.

Each of processor 101 and chipset 102 is typically constructed in accordance with a general-purpose computer architecture. That is, processor 101 interprets and executes an instruction code sequentially supplied from chipset 102 in accordance with an internal clock. Chipset 102 communicates internal data with various components connected thereto, and generates an instruction code necessary for processor 101. Further, chipset 102 has a module configured to cache data or the like obtained as a result of execution of arithmetic processing in processor 101.

Processing unit 10 includes main memory 104 and non-volatile memory 106 as memories.

Main memory 104 is a volatile storage region, and stores various programs to be executed by processor 101 after power is supplied to processing unit 10. Main memory 104 is also used as a working memory at the time of execution of each of the various programs by processor 101. As such a main memory 104, a device such as a DRAM (Dynamic Random Access Memory) or an SRAM (Static Random Access Memory) is used.

Non-volatile memory 106 stores a system program including a real-time OS, various application programs (modules) such as executable programs, and data such as a system setting parameter in a non-volatile manner. These programs and data are copied to main memory 104 so as to be accessible by processor 101 as necessary.

Processing unit 10 includes system bus controller 120 and network controller 140 as communication interfaces. These communication interfaces transmit output data and receive input data.

System bus controller 120 controls data communicate via system bus 11. More specifically, system bus controller 120 includes a DMA (Dynamic Memory Access) control circuit 122, a system bus control circuit 124, and a buffer memory 126. System bus controller 120 is internally connected to system bus 11 via a system bus connector 130 including a communication circuit. Processing unit 10 communicates, with a control target (detection sensor 6 or relay 7, each of which is included in the field device), a control command calculated by executing the control program and a state value of the control target via system bus connector 130.

Network controller 140 controls data communicate with another controller 100 via network 50 through communication connector 150. That is, network controller 140 controls transmission of output data and reception of input data in accordance with a network standard used. As an example, system 1000 employs Ethernet (registered trademark), TCP/IP (Transmission Control Protocol/Internet Protocol), UDP/IP (User Datagram Protocol/Internet Protocol), a common industrial protocol (CIP), or the like for communication of network 50. The communication standard applied to network 50 is not limited thereto.

Network controller 140 includes a network control circuit 144, a DMA control circuit 142, and a buffer memory 146 in order to communicate data with another controller 100 connected to network 50.

USB connector 110 is a communication interface configured to connect, to processing unit 10, network 13 to which support apparatus 200 belongs. Typically, a program, data, or the like transferred from support apparatus 200 and executable by processor 101 of processing unit 10 is loaded into controller 100 via USB connector 110.

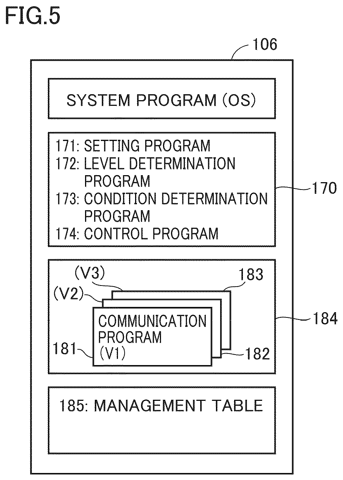

Fig. 5 is a schematic diagram showing an example of information stored in non-volatile memory 106 of Fig. 4. Referring to Fig. 5, non-volatile memory 106 of controller 100 includes a system program including an OS, a user-defined application 170, a communication program 184, and a management table 185 to be referred to for session communication.

User-defined application 170 includes: a setting program 171 configured to set a security level on a session; a level determination program 172 configured to determine a security level indicated by a session start request; a condition determination program 173 configured to determine whether or not the session start request satisfies a condition; and a control program 174. When executed, setting program 171, level determination program 172, and condition determination program 173 configure modules of a setting unit, a level determination unit, and a condition determination unit, respectively. Communication program 184 includes communication programs 181, 182 and 183 configured to perform communication in accordance with the communication protocols of versions V1 to V3, respectively.

### <C. Session>

In the present disclosure, the "recommended version" indicates a version having a predetermined security level recommended to be used in session communication between controller 100 and support apparatus 200. More specifically, the "recommended version" is set in controller 100 in the pre-registration process described above. As the "recommended version", one version having the highest security level or two or more versions having higher security levels among a plurality of versions usable for the session by controller 100 can be set. Moreover, applied version 275 indicates one version to be used for the session among one or more versions usable for the session by support apparatus 200 or the user.

### (c1. Explanation for Background of Embodiment)

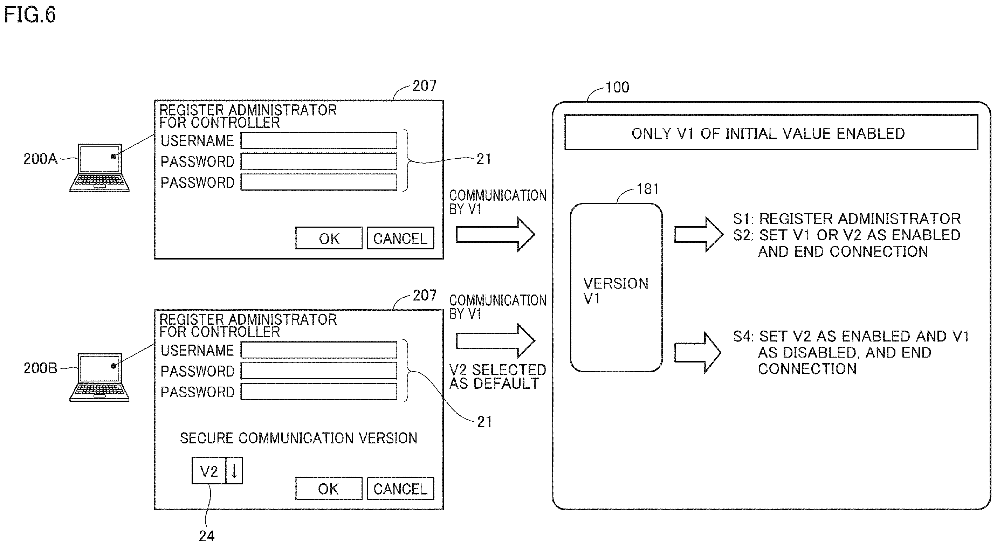

Each of Figs. 6 to 8 is a diagram schematically showing a background of the present embodiment. Fig. 6 shows a connection at the time of initially connecting support apparatus 200 to controller 100 when controller 100 is installed at a production site, for example. The initial value of the "recommended version" registered in advance in controller 100 at the time of shipment of controller 100 is, for example, V1 for the sake of simplicity of explanation. Fig. 6 shows controller 100 in which the "recommended version" indicates V1 as the initial value, and a support apparatus 200A and a support apparatus 200B each of which serves as support apparatus 200 and in each of which the "applied version" indicates V1. It should be noted that the initial value of the "recommended version" registered in advance in controller 100 is not limited to V1.

The UI screen of monitor 207 of support apparatus 200A includes an item 21 for setting an account (username and password) of the user (administrator) in controller 100. The UI screen of monitor 207 of support apparatus 200B includes item 21 described above and a button 24. Button 24 is operated by the user of support apparatus 200B so as to set support apparatus 200 such that the "applied version" is V2 in the subsequent session.

In Fig. 6, the "applied version" of each of support apparatuses 200A and 200B matches with "V1", which is the "recommended version" of controller 100, so that each of support apparatuses 200A and 200B can communicate information with controller 100. When communicating with support apparatus 200A, controller 100 registers the user of support apparatus 200A as an administrator (step S1), and support apparatus 200A sets the recommended version of the subsequent session in controller 100 to version V1 or V2 (step S2), and ends the connection.

When controller 100 communicates with support apparatus 200B, the recommended version in the subsequent session is set to version V2 and version V1 is set to be unusable (disabled) in controller 100 based on the user operation received by support apparatus 200B (step S4), and the connection is ended.

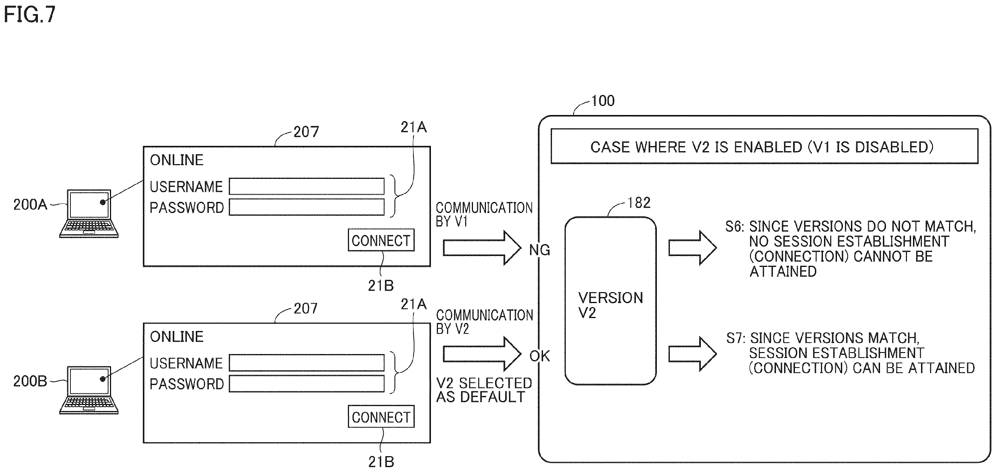

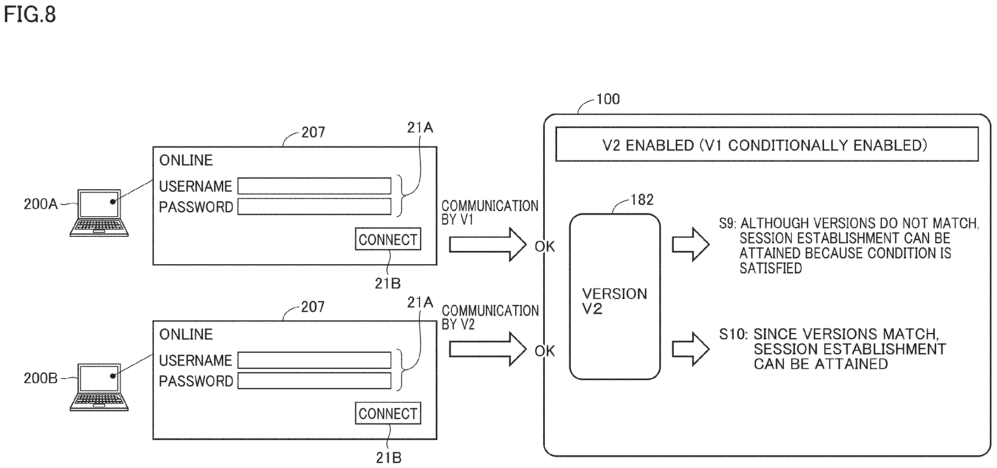

Each of Figs. 7 and 8 show a scene of reconnecting each of support apparatuses 200A, 200B to controller 100 after the communication of Fig. 6 is ended. The recommended version of controller 100 can be changed (set) by, for example, the administrator during a period from the end of the connection in Fig. 6 to the reconnection. Fig. 7 shows controller 100 in which the "recommended version" is V2 and version V1 is set to be disabled, and Fig. 8 shows controller 100 in which the "recommended version" is V2 and version V1 is set as being conditional.

Fig. 7 shows support apparatus 200A in which the "applied version" is V1 and support apparatus 200B in which the "applied version" is V2. The UI screen of monitor 207 includes an item 21A for receiving an operation of inputting the account of the user, and a button 21B to be operated to make a session start request. Each of support apparatuses 200A, 200B incorporates, into a communication frame for the session start request, the data of the account of the user and secure communication version 31. More specifically, secure communication version 31 indicates "V1" or "V2", each of which is the "applied version" of each of support apparatuses 200A, 200B.

Controller 100 compares secure communication version 31 of the session start request transferred from each of support apparatuses 200A and 200B with the recommended version "V2" of controller 100, and determines whether both the versions matches with each other. Controller 100 determines that secure communication version 31 of the session start request from support apparatus 200A does not match therewith, does not establish a session in accordance with the determination result (step S6), determines that secure communication version 31 of the session start request from support apparatus 200B matches therewith, and establishes a session in accordance with the determination result (step S7).

In the case of Fig. 7, support apparatus 200A in which the "applied version" does not match with the "recommended version" cannot establish a session with controller 100. On the other hand, Fig. 8 shows a case where even support apparatus 200A in which the "applied version" does not match with the "recommended version" can establish a session with controller 100. More specifically, in Fig. 8, the "recommended version" is set to V2 in controller 100, and version V1 is set as being conditional. In Fig. 8, controller 100 determines that secure communication version 31 of the session start request from support apparatus 200A does not match with the "recommended version". In this case, when it is determined that the session start request satisfies a condition associated with version V1, controller 100 establishes a session (step S9). Since it is determined that secure communication version 31 of the session start request from support apparatus 200B matches with the "recommended version", controller 100 establishes a session (step S10).

As shown in Fig. 8, even though it is determined that secure communication version 31 indicated by the session start request is the lower security level than the security level of the recommended version, controller 100 can establish the session when the session start request satisfies the condition. Hereinafter, an operation flow including an operation of setting the condition in controller 100 will be described.

### <D. Specific Flow>

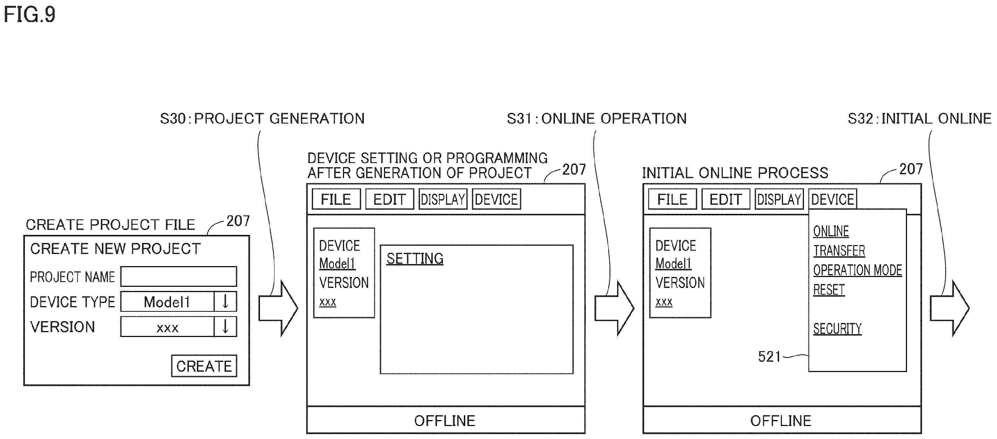

Each of Figs. 9 to 16 is a diagram schematically showing an operation flow of the pre-registration process according to the present embodiment. This operation flow is shown by using transition of the UI screen presented on monitor 207 of support apparatus 200.

### (d1. Operation Flow of Pre-Registration Process)

In an operation flow of d1, information of the administrator is registered and the recommended version is set in controller 100 based on a user operation on support apparatus 200. Pre-registration of other information is performed by an operation flow of d2 described later. The other information includes: information on a role different from the administrator in controller 100; or information on another version that is usable by controller 100 and that is different from the recommended version.

Each of Figs. 9 to 12 shows an operation flow of transferring a project file in the pre-registration process of Fig. 1. In Fig. 9, support apparatus 200 generates the project file based on a user operation received on the UI screen in an offline state in which communication with controller 100 is not performed (step S30). When an online operation of the user is received (step S31), support apparatus 200 switches the screen of monitor 207 to a UI screen of an initial online process. The project file includes, for example, user-defined application 170 including control program 174 for controller 100, setting data, or the like. The project file is transferred to controller 100 in a subsequent online state.

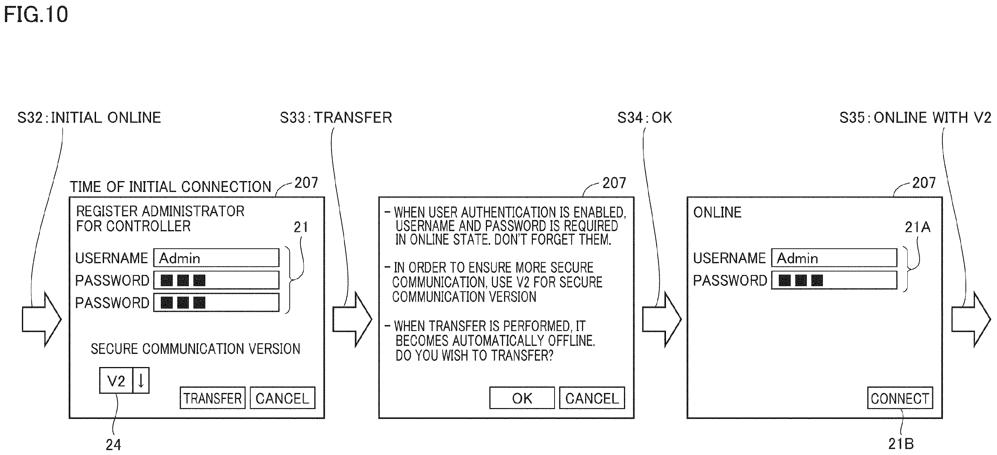

Support apparatus 200 is operated by the user having the administrator authority. More specifically, when a user operation on an item 521 of the UI screen is received (step S32), support apparatus 200 switches the screen of monitor 207 to a UI screen of Fig. 10. In Fig. 10, when a user operation and a transfer instruction are received on the UI screen (step S33), support apparatus 200 switches to a UI screen presenting a message that recommends version V2 as the secure communication version. When an "OK" operation is received from the user after the operation on button 24 (step S34), V2 is set as applied version 275 and a session with controller 100 is performed (step S35).

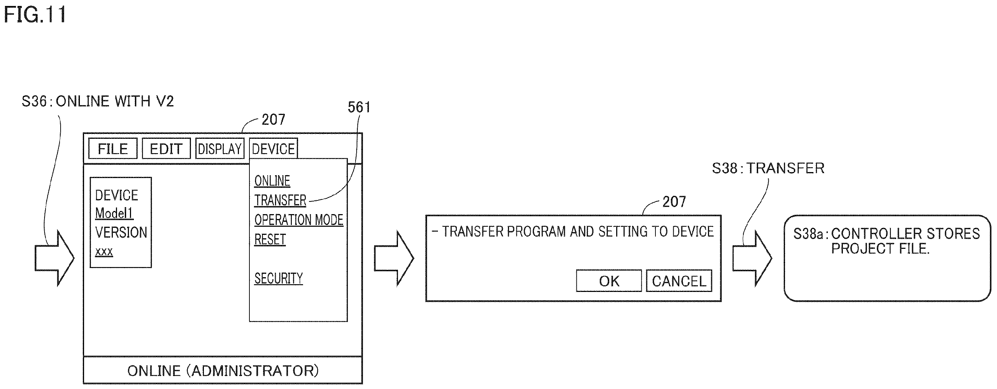

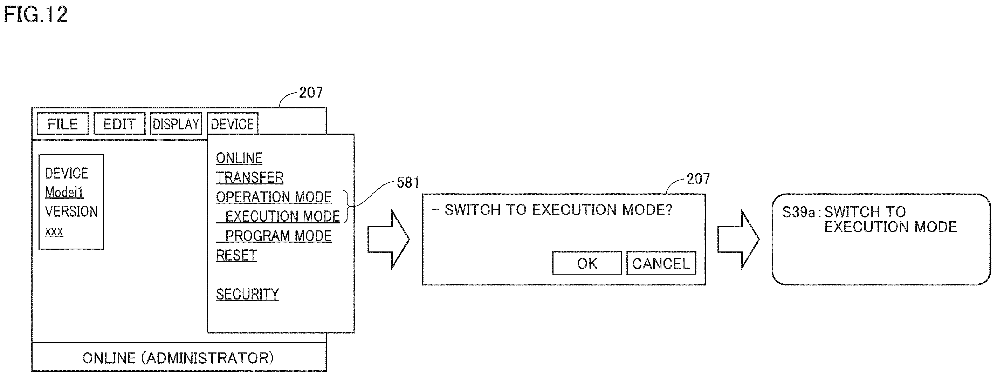

When the session is established (step S36) and a user operation on an item 561 of a UI screen of Fig. 11 is received, support apparatus 200 transfers the project file to controller 100 (step S38). Controller 100 stores the project file transferred from support apparatus 200 into non-volatile memory 106 (step S38a). Thereafter, when support apparatus 200 receives a user operation on an item 581 on a UI screen of Fig. 12, support apparatus 200 switches the operation mode of controller 100 to an execution mode for executing the program (step S39a).

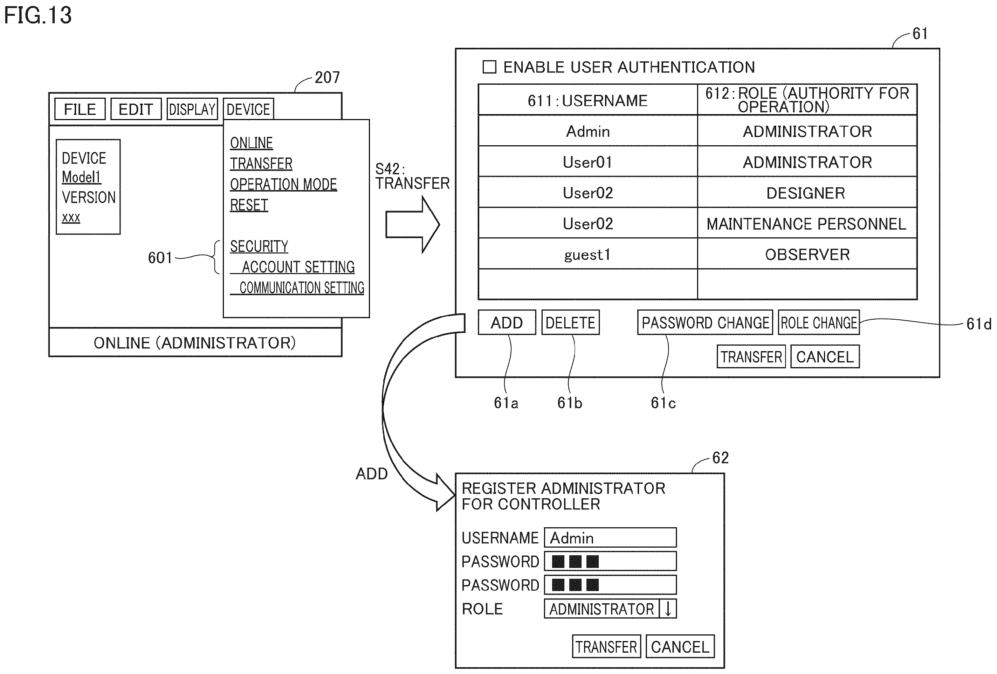

In the pre-registration process, support apparatus 200 transfers the information received from the user to controller 100 by operation flows of Figs. 13, 14, 15, and 16. Controller 100 stores the information received from support apparatus 200 into management table 185.

Fig. 13 shows an operation flow for the administrator to set an account or role of a user in controller 100. When support apparatus 200 in which applied version 275 indicates V2 receives a user operation on an item 601 of an UI screen in the online state, a request for account setting is transferred to controller 100 (step S42). In response to the request, controller 100 transfers an account list 250 to support apparatus 200. Support apparatus 200 presents, on UI screen 61, information that is based on account list 250 transferred from controller 100.

In UI screen 61, a username 611 and a role 612 are presented for each of a plurality of users of controller 100, and buttons 61a to 61c are presented. Button 61a or 61b is operated to add or delete an account, button 61c is operated to change a password, and button 61d is operated to change a role 612. The role indicates a scope of authority for operation on controller 100. The scope is the largest for the administrator. The administrator is permitted to operate buttons 61a to 61d, and users of roles other than the administrator are permitted to operate only button 61c. When a user operation on button 61a is received, support apparatus 200 switches from UI screen 61 to a UI screen 62. Based on a user operation received by support apparatus 200 on UI screen 62, an account and a role (administrator) are added (registered) to account list 250 of controller 100.

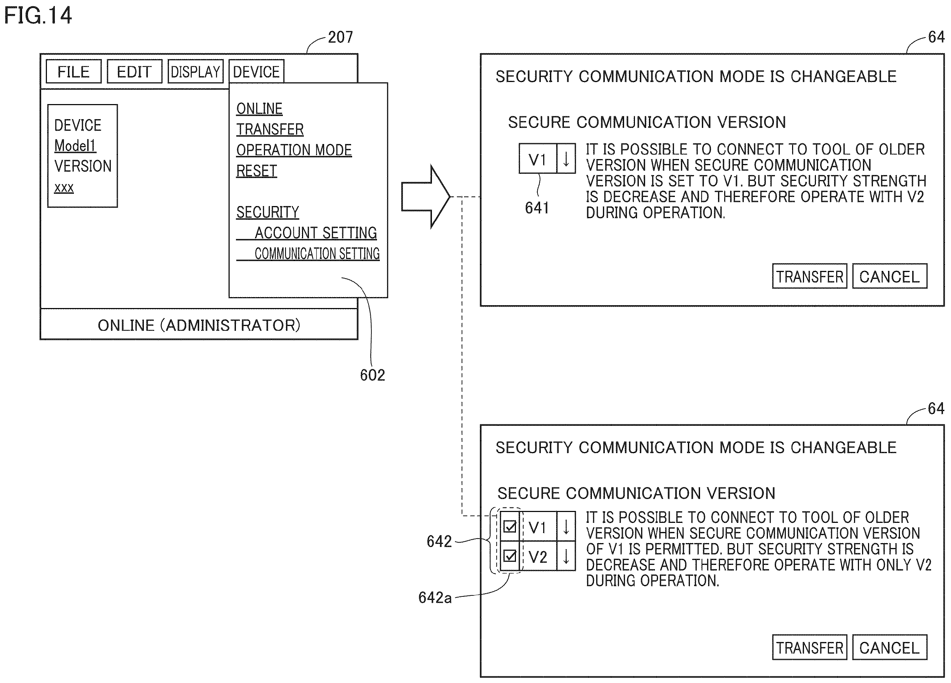

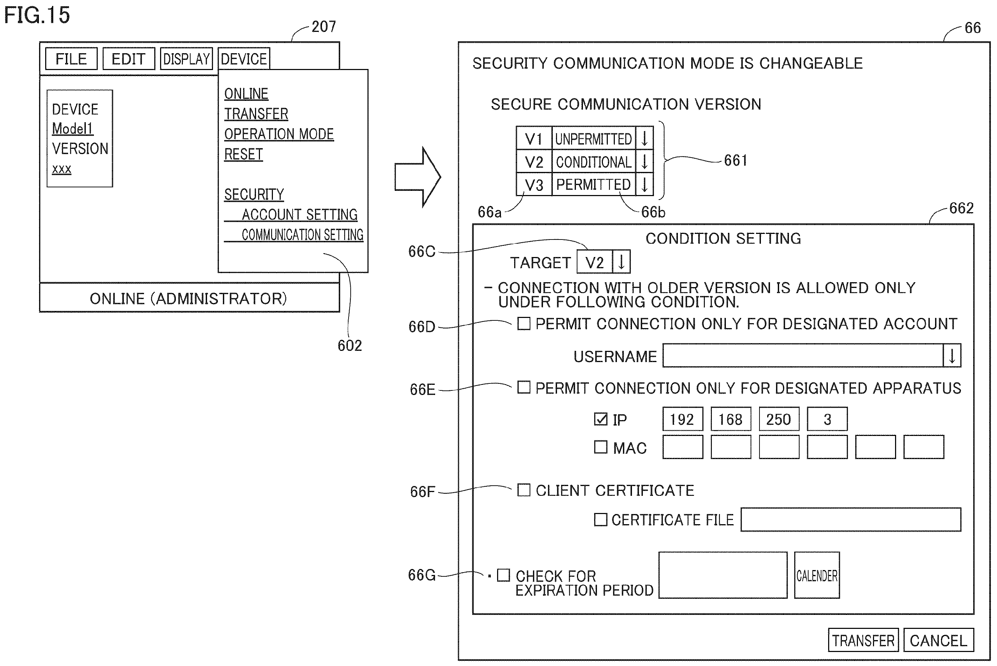

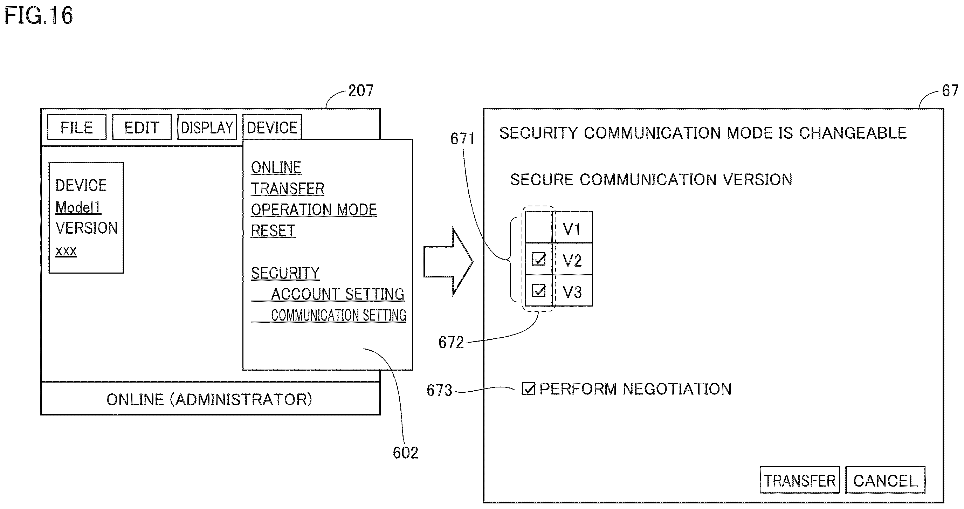

Each of Figs. 14 to 16 shows an operation flow for the administrator to register the recommended version in controller 100. When a user operation on an item 602 of the UI screen of Fig. 14 is received in the online state, support apparatus 200 in which applied version 275 indicates V2 presents, for example, an UI screen 64 of Fig. 14, an UI screen 66 of Fig. 15, or an UI screen 67 of Fig. 16.

In UI screen 64 of Fig. 14, a user operation of setting the recommended version of controller 100 is received. The user can operate button 641 so as to set only one of versions V1 and V2 as the "recommended version", and can operate button 642 so as to set each of both versions V1 and V2 with checks 642a added thereto as the "recommended version". The operation of setting the "recommended version" is not limited to the operation of Fig. 14, and may be, for example, an operation of Fig. 15.

In UI screen 66 of Fig. 15, a button 661 for receiving a user operation of setting the version of controller 100 is shown. Button 661 includes an identifier 66a and a designation 66b for each of versions V1, V2, and V3 usable for the session. Values that can be set in designation 66b of each version include "unpermitted" indicating that the use of the version is not permitted, "conditional" indicating that the use of the version is permitted when the condition is satisfied, and "permitted" indicating that the use of the version is permitted without any condition. A window 662 of UI screen 66 includes objects of items 66C to 66G each configured to receive an operation of setting the condition.

The user can register a version indicated by identifier 66a corresponding to designation 66b as the "recommended version" in controller 100 by setting "permitted" to designation 66b of UI screen 66 by the user operation.

### (d2. Another Operation Flow of Pre-Registration Process)

The user can register each version other than the recommended version on UI screen 66 as the "unpermitted" or "conditional" version in controller 100 by setting a value in designation 66b corresponding to identifier 66a of the version by the user operation.

Item 66C of UI screen 66 of Fig. 15 receives a user operation of setting a version to which a condition is to be set. Each of items 66D to 66F receives a user operation of setting a predetermined condition to be satisfied by the session start request in order to accept the session start request.

More specifically, items 66D and 66E receive operations of setting conditions for the user and the apparatus (support apparatus 200), respectively. Item 66E receives an operation of designating to use a client certificate for authentication. Item 66G receives an operation of setting an expiration period for which each of the conditions of items 66D to 66E is usable. Item 66D receives an operation of setting an account such as a username. Further, item 66E receives an operation of designating a communication address such as an IP address or a MAC address of support apparatus 200, for example. It should be noted that although the condition for determining to receive the session start request is set by the operation on item 66D and item 66E, a condition for determining not to receive the session start request may be set.

UI screen 67 of Fig. 16 includes items 671 and 673 for receiving user operations. In item 671, a mark 672 indicates that versions V2 and V3 are each designated as the "recommended version" by the user operation among versions V1, V2, and V3 usable by controller 100. When the user operation on item 673 is received, support apparatus 200 performs negotiation, which will be described later, between support apparatus 200 and controller 100.

In the present embodiment, support apparatus 200 transfers the information received by the user operation shown in each of Figs. 13 to 16 to controller 100 so as to set it in management table 185.

### <E. Communication Frame>

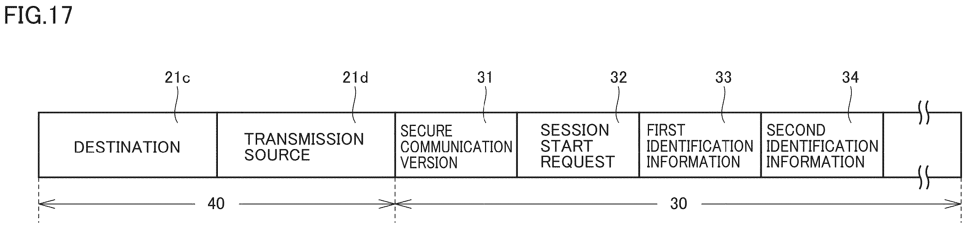

Fig. 17 is a diagram schematically showing a configuration example of the communication frame according to the present embodiment. Controller 100 and support apparatus 200 communicate commands, data, and the like using communication frames. Fig. 17 shows an example of a communication frame having a command of session start request 32. Referring to Fig. 17, the communication frame includes a header 40 configured to store header information and a body 30 configured to store a payload. Header 40 includes a destination 21c and a transmission source 21d. Body 30 includes secure communication version 31 indicating the value of applied version 275 of support apparatus 200, a command of session start request 32, and first identification information 33 and second identification information 34 for identifying the validity of the user. Destination 21c includes a communication address such as an IP address of controller 100. Transmission source 21d includes an identifier of support apparatus 200. The identifier includes, for example, a communication address of support apparatus 200. Such a communication address include an IP address or MAC (Media Access Control address) of support apparatus 200. First identification information 33 includes, for example, an account (username or password) or the like. Second identification information 34 includes, for example, a connection ticket or a certificate.

### <F. Management Table>

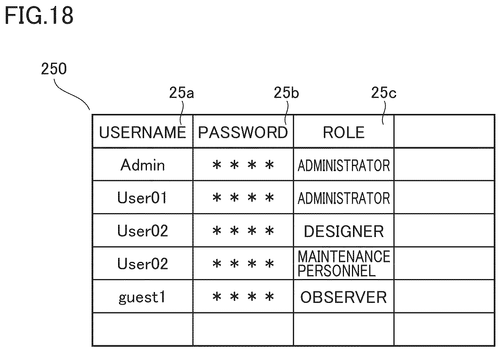

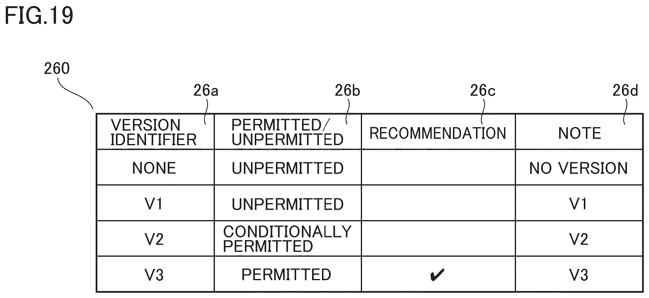

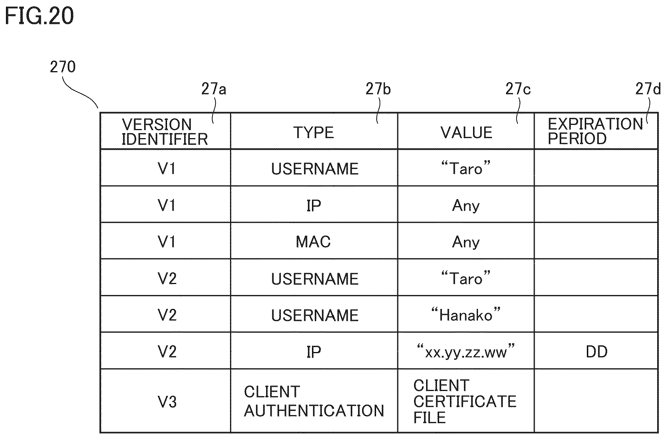

Each of Figs. 18 to 22 is a diagram schematically showing a management table according to the present embodiment. Management table 185 includes an account list 250 of Fig. 18, a version permission list 260 of Fig. 19, and condition tables 270, 270A, and 270B of Figs. 20, 21, and 22 indicating predetermined conditions for determining the validity of session start request 32.

Account list 250 of Fig. 18 stores account(s) (username(s) 25a and password(s) 25b) and role(s) 25c for one or a plurality of users, respectively. Version permission list 260 of Fig. 19 includes, for each of one or more versions usable by controller 100, an identifier 26a indicating a value of the version, a value 26b, a recommendation 26c indicating the "recommended version" of controller 100, and a note 26d. For value 26b, a value that is based on an operation on button 661 in UI screen 66 of Fig. 15 is set. Recommendation 26c in Fig. 19 is set to indicate version V3 indicating the highest security level among the versions usable by controller 100 as the "recommended version". It should be noted that the "recommended version" indicated by recommendation 26c is not limited to one version and may be a plurality of versions. For example, based on the operation on item 671 of UI screen 67 of Fig. 16, recommendation 26c may be set to indicate each of version V2 and version V3 as the "recommended version".

In condition table 270 of Fig. 20, controller 100 sets data in condition table 270 based on data (for example, data set in window 662 of UI screen 66 of Fig. 15 may be used) transferred from support apparatus 200. Condition table 270 indicates a condition for determining that controller 100 accepts session start request 32. More specifically, condition table 270 includes, for each of one or more versions usable by controller 100, an identifier 27a indicating a value of the version and a condition item accompanied with the version. The condition item includes, for example, a condition type 27b, a value 27c thereof, and an expiration period 27d that can use the condition. Type 27b includes, for example, the identifier of the user (for example, the username of the account or the like) and the identifier of support apparatus 200 (for example, the IP address or the MAC address of the communication address). According to Fig. 20, when controller 100 determines that such a condition is satisfied that the username of first identification information 33 of the communication frame for session start request 32 indicates "Taro" or "Hanako", the IP address of transmission source 21d indicates "xx.yy.zz.ww", and the time at which session start request 32 is received (or the time at which it is transferred) indicates a time before the expiration period "DD", controller 100 accepts session start request 32. It should be noted that the type of the item or the number of the items of the condition to be accompanied with the version are not limited to those in the item example of Fig. 20.

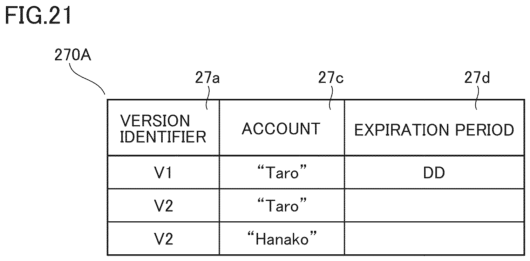

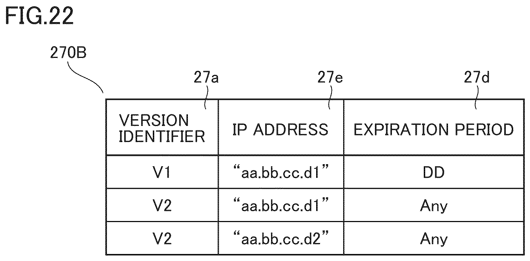

Condition table 270 of Fig. 20 may be divided into a condition table 270A for the account of Fig. 21 and a condition table 270B for IP address 27e of Fig. 22. It should be noted that each of condition tables 270, 270A, and 270B indicates the condition for determining to accept session start request 32, but may be configured to indicate a condition for determining not to accept session start request 32.

### <G. Flowcharts>

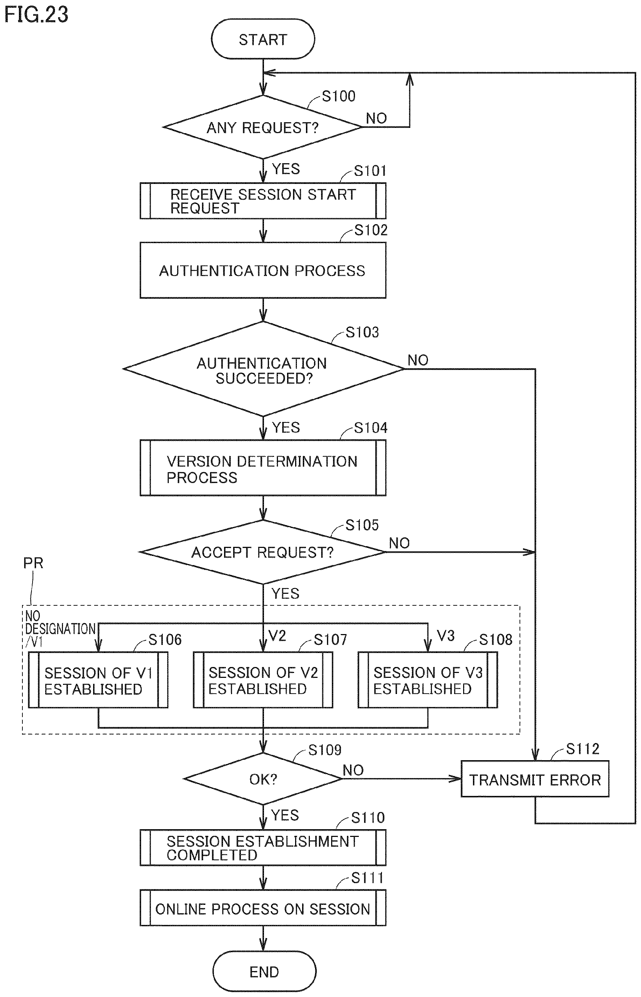

Each of Figs. 23 to 27 is a processing flowchart of the controller according to the present embodiment. In Fig. 23, controller 100 determines whether or not the communication frame for session start request 32 is received from support apparatus 200 (step S100). When it is determined that the communication frame for session start request 32 is not received (NO in step S100), the process of step S100 is repeated.

When it is determined that the communication frame for session start request 32 is received (YES in step S 100), controller 100 receives the communication frame (step S101), performs an authentication process (step S102), and determines whether or not the authentication is succeeded (step S 103). In the authentication process, controller 100 determines whether or not the account (username and password) indicated by first identification information 33 of the communication frame for session start request 32 matches with the account stored in account list 250, and outputs authentication success when they match with each other or outputs authentication failure when they do not match with each other.

When the authentication failure is determined (NO in step S103), controller 100 transfers the error to support apparatus 200, and returns to step S100. When the authentication success is determined (YES in step S103), a version determination process (step S104) is performed. In step S104, it is determined whether or not to accept session start request 32.

When it is determined not to accept it (NO in step S105), transition is made to a step S112, whereas when it is determined to accept it (YES in step S105), a process PR of the level setting unit is performed. In process PR, the setting unit of controller 100 sets the security level on the session established in response to session start request 32 (steps S106, S107, S108). More specifically, among communication programs 181 to 183, a communication program corresponding to the communication protocol of secure communication version 31 is executed to establish the session.

When it is determined whether or not the session establishment process is succeeded (step S109) and it is determined that the session establishment process is not succeeded (failed) (NO in step S109), transition is made to step S112, whereas when the session establishment process is succeeded (YES in step S109), controller 100 transfers a notification of the success of the session establishment to support apparatus 200 (step S110). Controller 100 performs an online process on the established session (step S111).

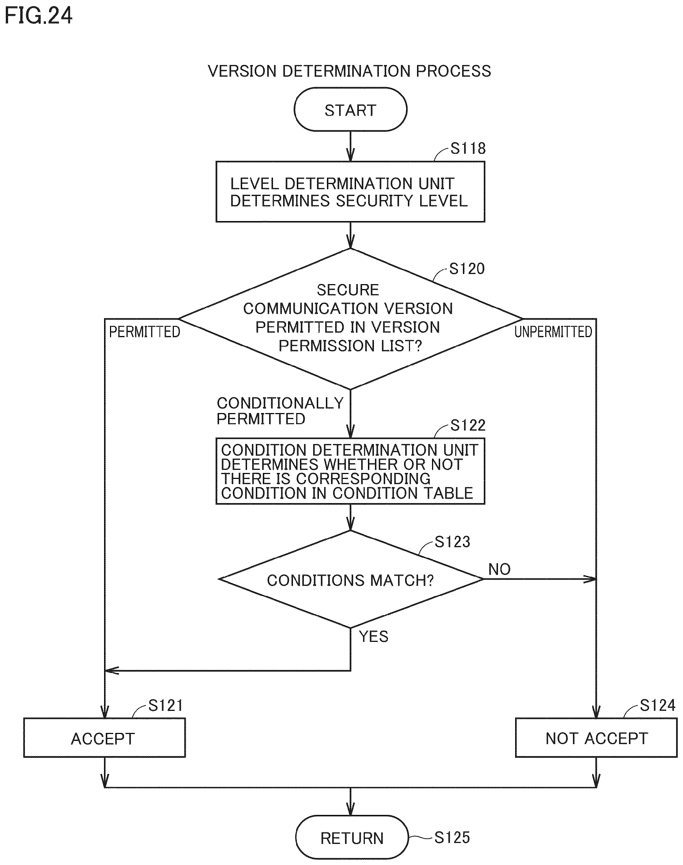

Fig. 24 shows the version determination process (step S104). In Fig. 24, the level determination unit of controller 100 determines whether secure communication version 31 of session start request 32 indicates the security level of the recommended version or the security level lower than the security level of the recommended version (step S118). More specifically, controller 100 searches version permission list 260 for a value 26b corresponding to identifier 26a indicating the value, based on the value of secure communication version 31. Controller 100 determines which one of "permitted", "conditionally permitted", and "unpermitted" is indicated by the searched value 26b.

When it is determined that searched value 26b indicates "permitted"("permitted" in step S120), that is, when it is determined that secure communication version 31 indicates the security level of the recommended version, controller 100 outputs that session start request 32 can be accepted (step S121), and returns to step S104 (step S125). When it is determined that searched value 26b indicates "conditionally permitted" ("conditionally permitted" in step S120), that is, when it is determined that secure communication version 31 indicates the lower security level than the security level of the recommended version, transition is made to a step S122.

When it is determined that searched value 26b indicates "unpermitted" ("unpermitted" in step S120), controller 100 outputs that session start request 32 cannot be accepted (step S124), and returns to step S104 (step S125).

In step S122, the condition determination unit of controller 100 uses condition table 270 to determine whether session start request 32 satisfies a predetermined condition for indicating the validity of the request (step S122). When the condition is satisfied (YES in step S123), transition is made to step S121, whereas when the condition is not satisfied (NO in step S123), transition is made to step S124. In step S122, controller 100 compares value 27c of type 27b corresponding to identifier 27a and matching with the value of secure communication version 31 with the value of the communication frame, determines that the condition is satisfied when the comparison result indicates that they match with each other, and determines that the condition is not satisfied when the comparison result does not indicate that they match with each other. For example, in the case where secure communication version 31 indicates version V2, according to condition table 270 of Fig. 20, it is determined that the condition is satisfied when the IP address of transmission source 21d of the communication frame indicates "xx.yy.zz.ww", the username of first identification information 33 of the communication frame indicates "Hanako" or "Taro", and the reception time of the communication frame indicates a time before the expiration period "DD", otherwise it is determined that the condition is not satisfied.

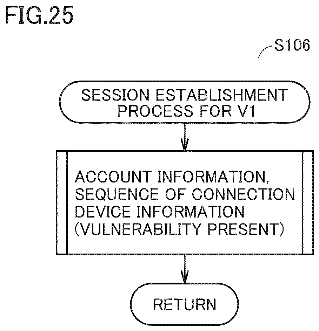

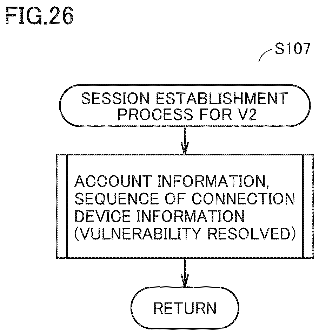

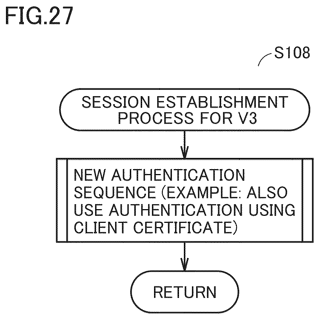

In each of steps S106 to S108, a session establishment process shown in Figs. 25 to 27 is performed. In step S106, communication program 181 is executed to perform the session establishment process in accordance with version V1, in step S107, communication program 182 is executed to perform the session establishment process in accordance with version V2, and in step S108, communication program 183 is executed to perform the session establishment process in accordance with version V3. Vulnerability in the session establishment of version V1 of Fig. 25 can be resolved in the session establishment by version V2 of Fig. 26 having the high security level, and the higher security level than that in the session establishment of version V2 of Fig. 26 is ensured in the session establishment of version V3 of Fig. 27.

The flowcharts of Figs. 23 to 27 can be implemented by processor 101 of controller 100 executing setting program 171, level determination program 172, condition determination program 173, and communication program 184.

### <H. Negotiation>

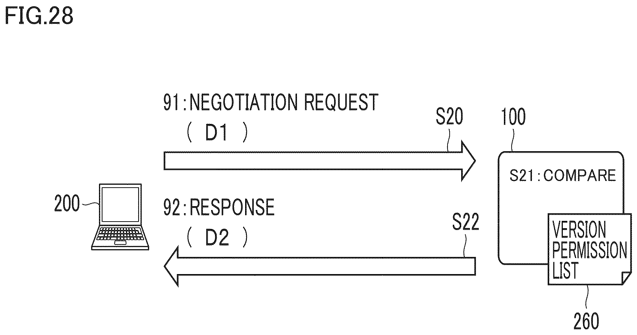

Fig. 28 is a diagram schematically showing a sequence of negotiation according to the present embodiment. In the present embodiment, controller 100 may be configured to perform the negotiation shown in Fig. 28 between controller 100 and support apparatus 200 after the pre-registration process described above is performed. After this negotiation is performed, the session establishment process of Fig. 23 is performed.

In Fig. 28, support apparatus 200 transfers negotiation request 91 to controller 100. Negotiation request 91 includes data D1 indicating one or more versions usable by support apparatus 200. Controller 100 receives negotiation request 91 (step S20), and compares one or more versions indicated by data D1 with one or more versions permitted to be used in version permission list 260 (step S21). Based on the comparison result, controller 100 determines whether or not the version permitted by controller 100 corresponds to the version usable by support apparatus 200, and transfers a response 92 including data D2 indicating the determination result to support apparatus 200 (step S22).

When controller 100 determines, based on the comparison described above, that one or more versions permitted in version permission list 260 match with one or more versions usable by support apparatus 200, data D2 indicates matched version(s). Support apparatus 200 determines a version having the highest security level among the one or more versions indicated by data D2 received from controller 100, and sets the determined version as applied version 275 to be used in the subsequent session. When it is determined that the one or more versions permitted by controller 100 do not match with the one or more versions usable by support apparatus 200 based on the comparison, controller 100 transfers, to support apparatus 200, data D2 indicating that they do not match with each other.

According to version permission list 260 of Fig. 19, since versions V2 and V3 are permitted in controller 100, for example, when data D1 indicates versions V1, V2, and V3, data D2 indicates versions V2 and V3, and when data D1 indicates only version V1, data D2 indicates a mismatch or an error.

It should be noted that in Fig. 28, controller 100 transfers, to support apparatus 200, data D2 indicating the matched version(s) that are based on the determination result, but it is not limited thereto. For example, controller 100 may transfer, to support apparatus 200, data D2 indicating a mismatched version that is based on the determination result. Moreover, data D2 may indicate both the matched version and the mismatched version.

### (h1. Another Example of Negotiation)

Instead of the configuration of Fig. 19, controller 100 may be configured to notify, to support apparatus 200, one or more permitted versions indicated by version permission list 260, in response to a negotiation request transferred from support apparatus 200. In this case, support apparatus 200 determines a version that is usable by support apparatus 200 and that has the highest security level from the one or more versions indicated by the notification from controller 100, and sets the determined version as applied version 275.

### <I. Program>

The program to be executed by controller 100 is stored in HDD 106 in a non-transitory manner. The program is transferred from support apparatus 200 or via network 50 and is stored into HDD 106. Alternatively, the program is distributed with the program being stored in a recording medium (not shown) such as a CD-ROM. The program stored in the CD-ROM is read from the CD-ROM and is stored into HDD 106.

The configuration example has been illustrated in which required modules are provided by executing programs by CPU 101 with regard to the modules provided by controller 100; however, a part or whole of the provided modules may be implemented using a dedicated hardware circuit (for example, an ASIC (Application Specific Integrated Circuit) or an FPGA (Field Programmable Gate Array)). In this case, controller 100 may execute a plurality of OSes for different purposes of use in parallel by using a virtualization technique, and may execute a necessary application on each OS.

### <J. Supplementary Notes>

The present embodiment as described above includes the following technical ideas.

### [Configuration 1]

A controller (100) for FA (Factory Automation), the controller (100) comprising:
a communication interface (110) configured to connect a network (13) to which an information processing apparatus (200) belongs;
a level determination unit (172) configured to determine whether a session start request (32) transmitted from the information processing apparatus indicates a predetermined security level or a lower security level than the predetermined security level;
a condition determination unit (173) configured to determine, when it is determined by the level determination unit that the session start request indicates the lower security level, whether or not the session start request satisfies a predetermined condition (270, 270A, 270B) for indicating validity of the request; and
a setting unit (171) configured to set a security level on a session established in response to the session start request, wherein
the setting unit is configured to
   set the predetermined security level on the session when it is determined by the level determination unit that the session start request indicates the predetermined security level, and
   set the lower security level on the session when it is determined by the level determination unit that the session start request indicates the lower security level and it is determined by the condition determination unit that the predetermined condition is satisfied.

### [Configuration 2]

The controller according to configuration 1, wherein the predetermined condition for indicating the validity includes a condition indicating validity of a request source having made the session start request.

### [Configuration 3]

The controller according to configuration 1 or 2, wherein
the controller is configured to communicate a communication frame with the information processing apparatus,
a communication frame for the session start request includes identification information (21d, 33, 34) for identifying a transmission source having transmitted the communication frame, and
the condition determination unit is configured to
   determine whether or not the identification information included in the communication frame for the session start request satisfies the condition indicating the validity.

### [Configuration 4]

The controller according to any one of configurations 1 to 3, wherein the predetermined condition includes a condition for an expiration period (27d) for which the predetermined condition is usable.

### [Configuration 5]

The controller according to any one of configurations 1 to 4, wherein
the information processing apparatus is configured to transmit a negotiation request (91) to the controller before the session start request, the negotiation request (91) including data (D1) indicating one or more security levels usable for the session by the information processing apparatus, and
the controller is configured to compare the one or more security levels indicated by the data included in the negotiation request received from the information processing apparatus with one or more security levels usable for the session by the controller, and transmit a comparison result (D2) to the information processing apparatus.

### [Configuration 6]

The controller according to any one of configurations 1 to 5, wherein the controller is configured to notify, in response to a negotiation request transmitted from the information processing apparatus before the session start request, one or more security levels usable for the session by the controller to the information processing apparatus.

### [Configuration 7]

A method performed by a controller (100) for FA (Factory Automation), wherein
the controller includes a communication interface (110) configured to connect a network (13) to which an information processing apparatus (200) belongs,
the method comprising:
   a level determination step of determining whether a session start request (32) transmitted from the information processing apparatus indicates a predetermined security level or a lower security level than the predetermined security level;
   a condition determination step of determining, when it is determined that the session start request indicates the lower security level in the level determination step, whether or not the session start request satisfies a predetermined condition (270, 270A, 270B) for indicating validity of the request; and
   a step of setting a security level on a session established in response to the session start request, wherein
   the step of setting includes
      setting the predetermined security level on the session when it is determined that the session start request indicates the predetermined security level in the level determination step, and
      setting the lower security level on the session when it is determined that the session start request indicates the lower security level in the level determination step and it is determined that the predetermined condition is satisfied in the condition determination step.

### [Configuration 8]

A program (171, 172, 173) for causing a processor (101, 102) of a controller (100) for FA (Factory Automation) to perform a method, wherein
the controller includes a communication interface (110) configured to connect a network (13) to which an information processing apparatus (200) belongs,
the method comprising:
   a level determination step of determining whether a session start request (32) transmitted from the information processing apparatus indicates a predetermined security level or a lower security level than the predetermined security level;
   a condition determination step of determining, when it is determined that the session start request indicates the lower security level in the level determination step, whether or not the session start request satisfies a predetermined condition (270, 270A, 270B) for indicating validity of the request; and
   a step of setting a security level on a session established in response to the session start request, wherein
   the step of setting includes
      setting the predetermined security level on the session when it is determined that the session start request indicates the predetermined security level in the level determination step, and
      setting the lower security level on the session when it is determined that the session start request indicates the lower security level in the level determination step and it is determined that the predetermined condition is satisfied in the condition determination step.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A controller (100) for FA (Factory Automation), the controller (100) comprising:
a communication interface (110) configured to connect a network (13) to which an information processing apparatus (200) belongs;
a level determination unit (172) configured to determine whether a session start request (32) transmitted from the information processing apparatus indicates a predetermined security level or a lower security level than the predetermined security level;
a condition determination unit (173) configured to determine, when it is determined by the level determination unit that the session start request indicates the lower security level, whether or not the session start request satisfies a predetermined condition (270, 270A, 270B) for indicating validity of the request; and
a setting unit (171) configured to set a security level on a session established in response to the session start request, wherein
the setting unit is configured to
set the predetermined security level on the session when it is determined by the level determination unit that the session start request indicates the predetermined security level, and
set the lower security level on the session when it is determined by the level determination unit that the session start request indicates the lower security level and it is determined by the condition determination unit that the predetermined condition is satisfied.

2. The controller according to claim 1, wherein the predetermined condition for indicating the validity includes a condition indicating validity of a request source having made the session start request.

3. The controller according to claim 1 or 2, wherein
the controller is configured to communicate a communication frame with the information processing apparatus,
a communication frame for the session start request includes identification information (21d, 33, 34) for identifying a transmission source having transmitted the communication frame, and
the condition determination unit is configured to
determine whether or not the identification information included in the communication frame for the session start request satisfies the condition indicating the validity.

4. The controller according to any one of claims 1 to 3, wherein the predetermined condition includes a condition for an expiration period (27d) for which the predetermined condition is usable.

5. The controller according to any one of claims 1 to 4, wherein
the information processing apparatus is configured to transmit a negotiation request (91) to the controller before the session start request, the negotiation request (91) including data (D1) indicating one or more security levels usable for the session by the information processing apparatus, and
the controller is configured to
compare the one or more security levels indicated by the data included in the negotiation request received from the information processing apparatus with one or more security levels usable for the session by the controller, and transmit a comparison result (D2) to the information processing apparatus.

6. The controller according to any one of claims 1 to 5, wherein the controller is configured to notify, in response to a negotiation request transmitted from the information processing apparatus before the session start request, one or more security levels usable for the session by the controller to the information processing apparatus.

7. A method performed by a controller (100) for FA (Factory Automation), wherein
the controller includes a communication interface (110) configured to connect a network to which an information processing apparatus (200) belongs,
the method comprising:
determining whether a session start request (32) transmitted from the information processing apparatus indicates a predetermined security level or a lower security level than the predetermined security level;
determining, when it is determined that the session start request indicates the lower security level in the determining whether the session start request transmitted from the information processing apparatus indicates the predetermined security level or the lower security level than the predetermined security level, whether or not the session start request satisfies a predetermined condition (270, 270A, 270B) for indicating validity of the request; and
setting a security level on a session established in response to the session start request, wherein
the setting includes
setting the predetermined security level on the session when it is determined that the session start request indicates the predetermined security level in the determining whether the session start request transmitted from the information processing apparatus indicates the predetermined security level or the lower security level than the predetermined security level, and
setting the lower security level on the session when it is determined that the session start request indicates the lower security level in the determining whether the session start request transmitted from the information processing apparatus indicates the predetermined security level or the lower security level than the predetermined security level and it is determined that the predetermined condition is satisfied in the determining whether or not the session start request satisfies the predetermined condition for indicating the validity of the request.

8. The method according to claim 7, wherein the predetermined condition for indicating the validity includes a condition indicating validity of a request source having made the session start request.

9. The method according to claim 7 or 8, wherein
the controller is configured to communicate a communication frame with the information processing apparatus,
a communication frame for the session start request includes identification information (21d, 33, 34) for identifying a transmission source having transmitted the communication frame,
the determining whether or not the session start request satisfies the predetermined condition for indicating the validity of the request includes
determining whether or not the identification information included in the communication frame for the session start request satisfies the condition indicating the validity.

10. The method according to any one of claims 7 to 9, wherein the predetermined condition includes a condition for an expiration period (27d) for which the predetermined condition is usable.

11. The method according to any one of claims 7 to 10, wherein
the information processing apparatus is configured to transmit a negotiation request (91) to the controller before the session start request, the negotiation request (91) including data (D1) indicating one or more security levels usable for the session,
the method further comprising
comparing one or more security levels indicated by the data included in the negotiation request transmitted from the information processing apparatus with one or more security levels usable for the session by the controller, and transmitting a comparison result (D2) to the information processing apparatus.

12. A program for causing a processor (101, 102) of a controller (100) for FA (Factory Automation) to perform a method, wherein
the controller includes a communication interface (110) configured to connect a network (13) to which an information processing apparatus (200) belongs,
the method comprising:
determining whether a session start request (32) transmitted from the information processing apparatus indicates a predetermined security level or a lower security level than the predetermined security level;
determining, when it is determined that the session start request indicates the lower security level in the determining whether the session start request transmitted from the information processing apparatus indicates the predetermined security level or the lower security level than the predetermined security level, whether or not the session start request satisfies a predetermined condition (270, 270A, 270B) for indicating validity of the request; and
setting a security level on a session established in response to the session start request, wherein
the setting includes
setting the predetermined security level on the session when it is determined that the session start request indicates the predetermined security level in the determining whether the session start request transmitted from the information processing apparatus indicates the predetermined security level or the lower security level than the predetermined security level, and
setting the lower security level on the session when it is determined that the session start request indicates the lower security level in the determining whether the session start request transmitted from the information processing apparatus indicates the predetermined security level or the lower security level than the predetermined security level and it is determined that the predetermined condition is satisfied in determining whether or not the session start request satisfies the predetermined condition for indicating the validity of the request.

13. The program according to claim 12, wherein the predetermined condition for indicating the validity includes a condition indicating validity of a request source having made the session start request.

14. The program according to claim 12 or 13, wherein
the controller is configured to communicate a communication frame with the information processing apparatus,
a communication frame for the session start request includes identification information (21d, 33, 34) for identifying a transmission source having transmitted the communication frame,
the determining whether or not the session start request satisfies the predetermined condition for indicating the validity of the request includes
determining whether or not the identification information included in the communication frame for the session start request satisfies the condition indicating the validity.

15. The program according to any one of claims 12 to 14, wherein the predetermined condition includes a condition for an expiration period (27d) for which the predetermined condition is usable.
